# EUROPÄISCHE PATENTSCHRIFT

(11) **EP 2 018 500 B1**
(45) Veröffentlichungstag und Bekanntmachung des Hinweises auf die Patenterteilung: **14.07.2010**
(21) Anmeldenummer: 07725063.7
(22) Anmeldetag: 10.05.2007
(51) Int. Cl.: F16L 55/07

(54) **VORRICHTUNG ZUM ENTLÜFTEN ODER BELÜFTEN ODER ENTLEEREN EINES ROHRLEITUNGSNETZES**
DEVICE FOR VENTING, AERATING OR DRAINING A PIPELINE NETWORK
DISPOSITIF PERMETTANT LA PURGE D'AIR OU L'APPORT D'AIR OU BIEN LA VIDANGE D'UN RESEAU DE CANALISATIONS

(30) Priorität: 12.05.2006 DE 102006022195
(43) Veröffentlichungstag der Anmeldung: 28.01.2009
(73) Patentinhaber: Schirle, Roswitha, 74597 Stimpfach (DE); Gruber, Guido, 73479 Ellwangen (DE)
(72) Erfinder: GRUBER, Guido, 73479 Ellwangen (DE)
(74) Vertreter: Dr. Weitzel & Partner
(86) Internationale Anmeldenummer: PCT/EP2007/004141
(87) Internationale Veröffentlichungsnummer: WO 2007/131698

(56) Entgegenhaltungen:
- DE-C1- 10 027 640
- DE-T2- 69 722 204
- DE-U- 7 229 977

## Beschreibung

Die Erfindung betrifft eine Be- und Entlüftungseinheit, insbesondere zum Entlüften der erdverlegten Rohrleitungen eines Fernwärmenetzes.

Rohrleitungen von Rohrleitungsnetzen, beispielsweise von kommunalen Fernwärmenetzen, bedürfen unter verschiedenen Aspekten einer laufenden Überwachung und Wartung.

Ein wichtiger Aspekt ist die Überwachung auf Lufteinschlüsse. Befindet sich Luft in der Leitung, so bildet diese Blasen, insbesondere im Bereich von Krümmern, Hochpunkten und toten Ecken, und wirkt dann als Strömungshindernis. Auch werden Messungen des Durchsatzes gestört. Aus diesem Grunde verwendet man Vorrichtungen, mit denen sich eine Entlüftung, eine Entleerung, und gegebenenfalls auch eine Belüftung für gewisse Anwendungsfälle durchführen lässt.

Bekannte Entlüftungseinheiten umfassen vor allem eine Steigleitung. Diese ist mit ihrem unteren Ende an einen Leitungsabschnitt des zu überwachenden Rohrleitungsnetzes angeschlossen. Ihr oberes Ende weist ein Absperrorgan auf, und zwar einen Kugelhahn.

DE 100 27 640 C1 beschreibt eine Vorrichtung zum Be- und/oder Entlüften von Flüssigkeits-Druckleitungen, mit einem in einem Ventilschacht angeordneten Ventil. Dabei geht es um die Erleichterung der Montage der Vorrichtung.

DE 697 22 204 T2 beschreibt eine Fernwärmeeinrichtung mit Zulauf- und Ablaufrohren, die sich unter einer Straßenoberfläche befinden. Dabei geht es um die Verbesserung der Wartung der Vorrichtung.

DE 7 229 977 U beschreibt einen Schacht zur Aufnahme von Abzweig- oder Verbindungsstellen von Rohrleitungen. Dabei geht es um die Anordnung von Handrädem zum Betätigen von Armaturen.

Die Steigleitung ist isoliert und wird zusätzlich von einem isolierten Mantelrohr umgeben. Dieses Mantelrohr ist an seinem oberen Ende mittels einer sogenannten Endkappe abgedeckt. Diese ist aufgeschrumpft und nur tagwasserdicht. Stehendes Wasser oder ständige Feuchtigkeit lösen die Verklebung. Das Wasser kann in den vom Mantelrohr und von der Endkappe umschlossenen Innenraum eindringen und die Isolierung durchnässen. Die Steigleitung sowie der Kugelhahn werden in Mitleidenschaft gezogen und korrodieren.

Der Kugelhahn kann nur über einen seitlich angebrachten Bedienungshebel betätigt werden was beschwerlich ist. Die Betätigungswelle ist dabei durch das Mantelrohr nach außen hindurchgeführt und nicht weiter abgedichtet, so dass auch hier Nässe eindringen kann. Zusätzlich gelangt Feuchtigkeit von oben her zum Kugelhahn.

Ein weiterer Nachteil des bekannten Systems besteht darin, dass der Kugelhahn in eingeschäumtem Zustand verlegt wird. Deswegen ist eine Verlängerung oder Verkürzung des Systems in vertikaler Richtung nur schwer möglich. Die Länge der Steigleitung und die Höhenposition des Kugelhahnes müssen somit bereits bei Bestellung festgelegt werden. Zum Zeitpunkt der Bestellung ist dies jedoch schwierig.

Das Mantelrohr ist von einem Schutzrohr umgeben. Dieses muss einen relativ großen Durchmesser haben, damit der Kugelhahn mit seinem seitlich herausgeführten Bedienungshebel betätigt werden kann. Dies führt wiederum zu Problemen bezüglich der Straßenkappe. Deren Abmessungen sind nämlich aus Festigkeitsgründen begrenzt. Auch steigen die Investitionskosten und Betriebs- / Unterhaltungskosten mit größeren Durchmessern der Kappen und Tragplatten, da die Belastung mit größer werdendem Durchmesser höher wird, und die beteiligten Bauteile stärker dimensioniert werden müssen.

Einheiten der genannten Art weisen im Verlaufe des Betriebes somit erhebliche Mängel auf. Die Kugelhähne sowie die Medienrohre, die beispielsweise Heißwasser führen, sind häufig durchrostet, und die ganze Einheit ist durchnässt. Die bekannten Einheiten sind somit versorgungsunsicher. Reparatur- und Wartungsarbeiten sind teuer.

Der Erfindung liegt die Aufgabe zugrunde, eine Vorrichtung zum Entlüften, Belüften und Entleeren eines Rohrleitungsnetzes, insbesondere eines Fernwärmenetzes, gemäß dem Oberbegriff von Anspruch 1 derart zu gestalten, dass vor allem die Versorgungssicherheit gewährleistet ist. Die Einheit soll leicht und zuverlässig bedienbar sein. Sie soll über lange Zeit störungsfrei arbeiten und wartungsarm sein.

Diese Aufgabe wird durch die Merkmale von Anspruch 1 gelöst.

Die Erfindung ist anhand der Zeichnung näher erläutert. Darin ist im einzelnen folgendes dargestellt:
Figur 1 zeigt eine Steigleitung eines Rohrleitungsnetzes in einem axialen Vertikalschnitt mit aufgesetzter Verschlusskappe.
Figur 2 zeigt die Steigleitung gemäß Figur 1 mit abgenommener Verschlusskappe, aber mit aufgesetztem Rohrkrümmer.

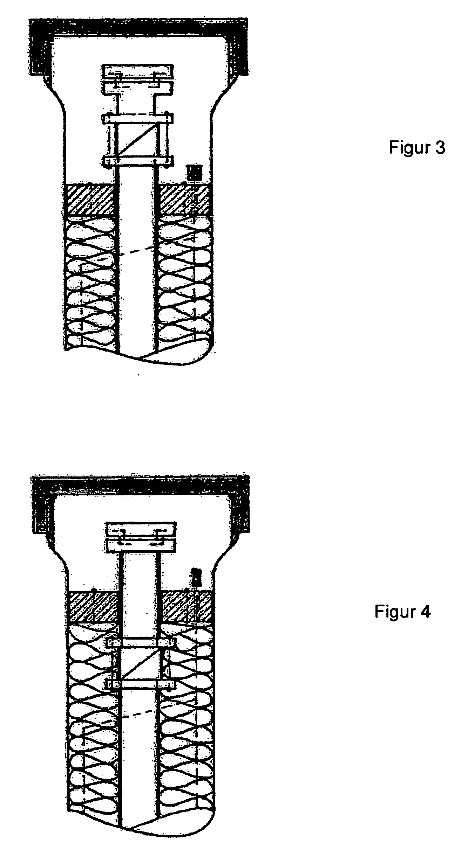

Figur 3 zeigt eine weitere Ausführungsform mit nur einer einzigen Ringdichtung und mit einem oberhalb der Ringdichtung liegenden Absperrorgan.
Figur 4 zeigt eine weitere Ausführungsform, ebenfalls mit nur einem einzigen Dichtring und mit einem unter der Ringdichtung liegenden Absperrorgan.

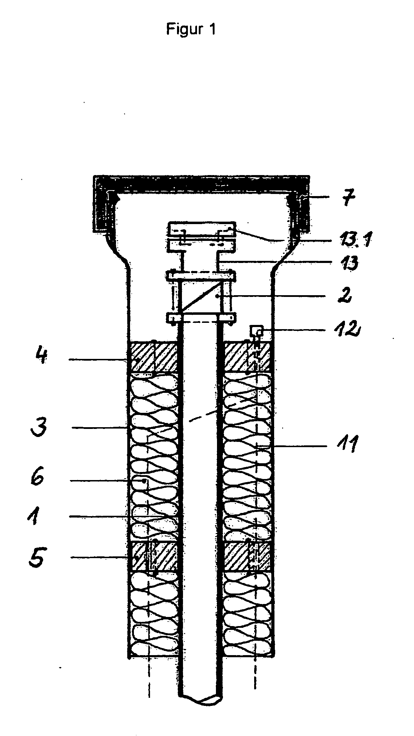

Die in Figur 1 gezeigte eine Steigleitung 1 ist an ihrem unteren Ende an eine horizontale Leitung angeschlossen, die hier nicht dargestellt ist, die aber Bestandteil eines kommunalen Fernwärmenetzes ist. Dieses Femwärmenetz führt Heißwasser.

Die Steigleitung 1 weist an ihrem oberen Ende ein Ventil 2 auf. Dieses ist wie folgt aufgebaut: Es enthält ein Ventilteller, der sich beispielsweise in horizontaler Richtung erstreckt und der vertikal auf und ab bewegbar ist. Dabei ist der Ventilteller durch eine hier nicht gezeigte Feder in Schließstellung gehalten. Die Feder wirkt von unten nach oben, und die Schließstellung des Ventiltellers befindet sich somit in einer oberen Position. Dieser kann entgegen der Kraft der Feder in eine untere Position gedrückt werden, und befindet sich damit in einer Offen-Position.

Die Steigleitung ist von einem Mantelrohr 3 umgeben. Das Mantelrohr 3 hat einen wesentlich größeren Durchmesser, so dass zwischen der Außenfläche der Steigleitung 1 und der Innenfläche des Mantelrohres 3 ein Ringraum verbleibt.

Im Ringraum sind zwei Ringdichtungen 4, 5 vorgesehen. Dabei handelt es sich um Ringe aus einem elastischen Material, beispielsweise aus Gummi. Jeder Ring ist in axialer Richtung zusammenpressbar (stauchbar), beispielsweise durch zwei Edelstahlplatten, die auf den beiden Stirnflächen angeordnet sind, und die mittels Spannschrauben aufeinander zubewegt werden können, um den Gummiring zu stauchen. Bei einem axialen Stauchen findet ein radiales Ausdehnen des Gummiringes statt, so dass sich dieser sowohl innen an die Außenfläche der Steigleitung 1 anlegt, als auch außen an die Innenfläche des Mantelrohres 3. Es findet somit ein sattes Anliegen des Gummiringes an den genannten Flächen statt. Eine weitere Ringdichtung 5 befindet sich weiter unten, so dass zwischen den beiden Ringdichtungen 4, 5 ein axialer Abstand herrscht. Der Raum zwischen den beiden Ringdichtungen 4, 5 ist von einer Wärmedämmmasse 6 ausgefüllt. Auch unterhalb der unteren Ringdichtung 5 ist Wärmedämmmasse 6 enthalten.

Wie man sieht, ist das Mantelrohr 3 in seinem oberen Bereich erweitert. Es trägt eine Verschlusskappe 7. Die Verschlusskappe 7 besteht ebenfalls aus Kunststoff, genauso wie das Mantelrohr 3. Die Verschlusskappe 7 wird beispielsweise mittels Gewindeverbindung und Flachdichtung auf das Mantelrohr 3 aufgeschraubt und abgedichtet. Das Ventil 2 befindet sich somit in einem Innenraum, der begrenzt ist von der Verschlusskappe 7, vom oberen Teil des Mantelrohres 3 sowie von der oberen Ringdichtung 4. Dieser Innenraum 14 ist somit hermetisch gegen jegliche Einflüsse von außen her abgesperrt. Dabei verhindert die obere Ringdichtung 4 ein Eindringen von Wasser von oben her, während die untere Ringdichtung 5 gegen Wasser schützt, das von unten her aufsteigt.

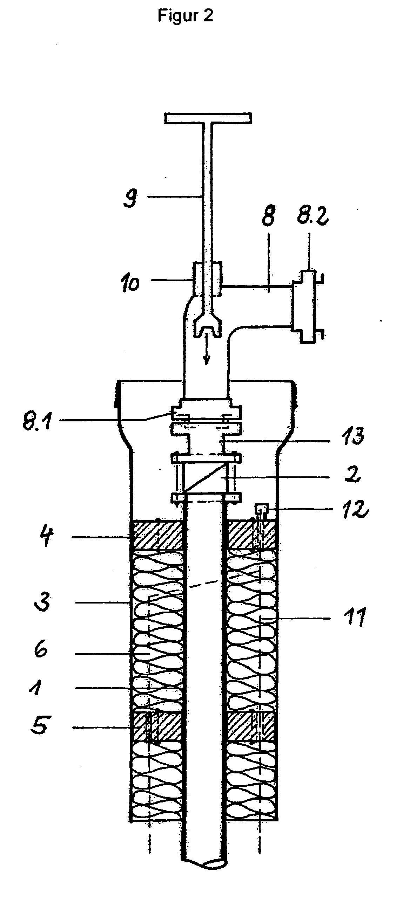

Aus Figur 2 erkennt man einen Rohrkrümmer 8. Dieser ist oberhalb des Flansches 13 an das Mantelrohr 1 angeschlossen. Das Anschließen erfolgt nur zum Betätigen des Ventiles 2 zum Zwecke des Belüftens, Entlüftens und Entleerens. Rohrkrümmer 8 ist mit einem unteren Flansch 8.1 am Ventil 2 angeschlossen.

Man erkennt einen weiteren oberen Flansch 8.2 des Rohrkrümmers. Hieran lässt sich ein Schlauch anschließen - hier nicht dargestellt.

Im Rohrkrümmer 8 ist ein Betätigungsschlüssel 9 vertikal verschiebbar gelagert - siehe das Dichtlager 10.

Es ist weiterhin ein Alarmsystem vorgesehen. Dieses besteht aus Leiterdrähte 11. Am oberen Ende der Leiterdrähte 11 befindet sich eine Anschlussmöglichkeit 12, an der beispielsweise ein Überwachungsgerät angeschlossen werden kann. Zudem bietet diese Anschlussmöglichkeit 12 eine zusätzliche Messstelle zur genaueren Überwachung. Die Leiterdrähte 11 werden im allgemeinen nach unten zu dem genannten nicht gezeigten horizontalen Rohrabschnitt geführt, und ist Bestandteil eines Kontroll- und Signalsystems des gesamten Rohrleitungsnetzes.

Die hier beschriebene Einheit arbeitet wie folgt:

Das Ventil 2 ist im normalen Betriebszustand geschlossen. Das Ventil liegt beispielsweise in seiner oberen Position an einem Sitz an, und zwar angedrückt durch die Kraft der genannten Feder und durch den momentan anstehenden Betriebsdruck. Die Steigleitung ist somit nach oben hin abgesperrt. Der Rohrkrümmer 8 mit seinem Betätigungsschlüssel 9 ist nicht montiert.

Sobald im Laufe der Wartung und Überwachung des Rohrleitungsnetzes erkannt wird, dass sich Luft im System befindet, so wird die Verschlusskappe 7 und der Blindflansch 13.1 demontiert. Danach wird der untere Flansch 8.1 des Rohrkrümmers 8 an den Flansch 13 des Ventils 2 angeschraubt. An den oberen Flansch 8.2 des Rohrkrümmers 8 wird ein Schlauch angeschlossen, so wie bereits erwähnt.

Der Betätigungsschlüssel 9 wird nach unten verfahren, bis er die Klappe des Ventils 2 erreicht, die er dann beispielsweise nach unten drückt, und damit in die Offen-Position. Nunmehr tritt Luft nach oben durch den Rohrkrümmer 8 aus. Das Ventil 2 wird so lange in Offen-Position gehalten, bis keine Luft mehr kommt, sondern das Betriebsmedium. Sodann wird der Betätigungsschlüssel 9 wieder nach oben herausgeführt, so dass das Ventil 2 durch die Kraft der Federn schließt. Zusätzlich kann mit dem Betätigungsschlüssel 9 eine Zwangsverschließung herbeigeführt werden.

Es versteht sich, dass das Rohrleitungsnetz auch andere Medien als die hier genannten führen kann, beispielsweise Kaltwasser oder Öl.

### Bezugszeichenliste

- 1: Steigleitung
- 2: Ventil
- 3: Mantelrohr
- 4, 5: Ringdichtung
- 6: Wärmedämmmasse
- 7: Verschlusskappe
- 8: Rohrkrümmer
- 8.1: unterer Flansch
- 8.2: oberer Flansch
- 9: Betätigungsschlüssel
- 10: Dichtlager
- 11: Leiterdrähte
- 12: Anschlussmöglichkeit
- 13: Flansch
- 13.1: Blindflansch

## Patentansprüche

1. Entlüftungseinheit zum Entlüften oder Belüften oder Entleeren eines Rohrleitungsnetzes,
mit einem Mediumrohr (1), das an seinem unteren Ende mit einem Leitungsabschnitt des Rohrleitungsnetzes in Verbindung steht;
mit einem Absperrorgan (2), das am Mediumrohr (1) angeordnet ist;
mit einem Mantelrohr (3), das das Mediumrohr (1) unter Belassen eines Ringraumes umgibt, und das aus Polyethylen oder einem anderen Werkstoff besteht;
mit einer Verschlusskappe (7);
**gekennzeichnet durch** die folgenden Merkmale:
der Ringraum weist wenigstens eine Ringdichtung (4) auf; der Innenraum (14), der **durch** die Verschlusskappe (7), das Mantelrohr (3) und die Ringdichtung (4) - bei zwei oder mehreren Ringdichtungen (4, 5) durch die obere Ringdichtung (4) begrenzt ist, ist gegen die äußere Umgebung hermetisch abgesperrt.

2. Vorrichtung nach Anspruch 1, **dadurch gekennzeichnet, dass** das Mediumrohr (1) oberhalb des Absperrorganes (2) verschließbar ist.

3. Vorrichtung nach Anspruch 1 oder 2, **dadurch gekennzeichnet, dass** zwei Ringdichtungen (4,5) vorgesehen sind.

4. Vorrichtung nach Anspruch 1 bis 3, **dadurch gekennzeichnet, dass** jede Ringdichtung (4,5) durch eine Spannvorrichtung in axialer Richtung stauchbar ist, so dass sie sich in radialer Richtung ausdehnt und unter Spannung sowohl an der Außenfläche des Mediumrohrs (1) als auch an der Innenfläche des Mantelrohres (3) anliegt.

5. Vorrichtung nach einem der Ansprüche 1 bis 4, **dadurch gekennzeichnet, dass** der Ringraum zwischen der oberen Ringdichtung (4) und der Anschlussstelle an den Leitungsabschnitt mit einem Wärmedämmmaterial (6) ausgefüllt ist.

6. Vorrichtung nach einem der Ansprüche 1 bis 5, **dadurch gekennzeichnet, dass** das Absperrorgan während des Betriebes durch den Druck des im Rohrleitungsnetz enthaltene Mediums oder durch eine Feder oder durch ein anderes Mittel in Schließstellung gehalten ist, und durch einen von oben her wirkenden Gegendruck öffenbar ist.

7. Vorrichtung nach einem der Ansprüche 1 bis 6, **dadurch gekennzeichnet, dass** an das obere Ende des Mediumrohrs (1) eine Entlüftungs- bzw. Entleerungsvorrichtung anschließbar ist.

8. Vorrichtung nach Anspruch 7, **gekennzeichnet durch** die folgenden Merkmale:
an das obere Ende des Mediumrohrs (1) ist einen Entlüftungs- bzw. Entleerungsleitung anschließbar;
in die Entlüftungs-/Entleerungsleitung ist ein Betätigungsmechanismus einführbar, mit dem sich das Absperrorgan (2) in Offenstellung bringen lässt.

9. Vorrichtung nach Anspruch 8, **gekennzeichnet durch** die folgenden Merkmale:
die Entlüftungs-/Entleerungsleitung umfasst einen Rohrkrümmer, die mit einem unteren Flansch/Kupplungsteil (8.1) an den Flansch/Kupplungsteil (13) anschließbar ist, und das einen oberen Flansch/Kupplungsteil (8.2) zum Anschluss an eine Zu-/Abführleitung, zum Beispiel einen Schlauch, aufweist;
es ist ein Druck-/Zugstab (9) vorgesehen, der in einem Dichtlager (10) des Rohrkrümmers (8) vertikal auf- und abfahrbar ist, um den Schließmechanismus des Ventils (2) in Offen-/Zu-Position zu versetzen.

10. Vorrichtung nach einem der Ansprüche 1 bis 9, **dadurch gekennzeichnet, dass** Leiterdrähte (11) unterschiedlicher Systeme im Ringraum zwischen dem Mediumrohr (1) und dem Mantelrohr (3) verlegt sind, die an ihrem oberen Ende eine Anschlussmöglichkeit aufweisen.

11. Vorrichtung nach einem der Ansprüche 1 bis 10, **dadurch gekennzeichnet, dass** das Mediumrohr (1) an seinem oberen Ende eine Verschlussvorrichtung (13.1) aufweist.

## Claims

1. A ventilation unit for venting or airing or discharging a pipeline system, comprising a medium pipe (1) which is in connection with a line section of the pipeline system with its bottom end, a shut-off device (2) which is arranged on the medium pipe (1), a jacket pipe (3) which encloses the medium pipe (1) by leaving an annular space and consists of polyethylene or another material, and a sealing cap (7), **characterized by** the following features:
the annular space comprises at least one ring seal (4), the inner space (14) which is delimited by the sealing cap (7), the jacket pipe (3) and the ring seal (4), and by the upper ring seal (4) in the case of two or more ring seals (4, 5), is hermetically sealed against the external environment.

2. An apparatus according to claim 1, **characterized in that** the medium pipe (1) can be sealed above the shut-off device (2).

3. An apparatus according to claim 1 or 2, **characterized in that** two ring seals (4, 5) are provided.

4. An apparatus according to claim 1 to 3, **characterized in that** each ring seal (4, 5) is compressible by a clamping apparatus in the axial direction, so that it expands in the radial direction and rests under tension both on the outside surface of the medium pipe (1) and on the inside surface of the jacket pipe (3).

5. An apparatus according to one of the claims 1 to 4, **characterized in that** the annular space between the upper ring seal (4) and the connection point to the line section is filled with a heat insulation material (6).

6. An apparatus according to one of the claims 1 to 5, **characterized in that** the shut-off device is held in the closed position during operation by the pressure of the medium contained in the pipeline system or by a spring or by another means, and can be opened by a counter-pressure acting from above.

7. An apparatus according to one of the claims 1 to 6, **characterized in that** a venting or discharging apparatus can be connected to the upper end of the medium pipe (1).

8. An apparatus according to claim 7, **characterized by** the following features:
a venting or discharging line can be connected to the upper end of the medium pipe (1), an actuating mechanism can be inserted into the venting/discharging line, with which the shut-off device (2) can be brought to the opened position.

9. An apparatus according to claim 8, **characterized by** the following features:
the venting/discharging line comprises an elbow which can be connected with a bottom flange/coupling part (8.1) to the flange/coupling part (13) and which has an upper flange/coupling part (8.2) for connection to a feed/discharge line, e.g. a tube, with a pressing/pull rod (9) being provided which can be moved up and down vertically in a sealing bearing (10) of the elbow in order to bring the closing mechanism of the valve (2) to the open/closed position.

10. An apparatus according to one of the claims 1 to 9, **characterized in that** conductor wires (11) of different systems are laid in the annular space between the medium pipe (1) and the jacket pipe (3), which wires have a possibility for connection at their upper end.

11. An apparatus according to one of the claims 1 to 10, **characterized in that** the medium pipe (1) has a closing apparatus (13.1) at its upper end.

## Revendications

1. Unité d'évent pour la purge d'air ou l'aération ou la vidange d'un réseau de canalisations,
avec un tuyau de fluide (1) qui est relié à son extrémité inférieure avec un segment de conduite du réseau de canalisations ;
avec un organe d'arrêt (2) disposé sur le tuyau de fluide (1) ;
avec un tuyau d'enveloppe (3) qui entoure le tuyau de fluide (1) en laissant
un espace annulaire et qui se compose de polyéthylène ou d'un autre matériau ;
avec un capuchon d'obturation (7) ;
**caractérisé en ce que** :
l'espace annulaire présente au moins un joint torique (4) ;
l'espace intérieur (14) délimité par le capuchon d'obturation (7), le tuyau d'enveloppe (3) et le joint torique (4), ou le joint torique supérieur (4) s'il y a deux ou plusieurs joints toriques (4, 5) est fermé hermétiquement vis-à-vis de l'environnement extérieur.

2. Dispositif selon la revendication 1, **caractérisé en ce que** le tuyau de fluide (1) peut être obturé au-dessus de l'organe d'arrêt (2).

3. Dispositif selon la revendication 1 ou 2, **caractérisé en ce que** deux joints toriques (4, 5) sont prévus.

4. Dispositif selon les revendications 1 à 3, **caractérisé en ce que** chaque joint torique (4, 5) peut être écrasé dans le sens axial par un dispositif de serrage, de sorte qu'il se dilate dans le sens radial et repose sous contrainte aussi bien sur la surface extérieure du tuyau de fluide (1) que sur la surface intérieure du tuyau d'enveloppe (3).

5. Dispositif selon l'une des revendications 1 à 4, **caractérisé en ce que** l'espace annulaire entre le joint torique supérieur (4) et le point de raccordement sur le segment de conduite est rempli d'un matériau isolant thermique (6).

6. Dispositif selon l'une des revendications 1 à 5, **caractérisé en ce que** l'organe d'arrêt est retenu dans la position fermée pendant le fonctionnement par la pression du fluide contenu dans le réseau de canalisations ou par un ressort ou par un autre moyen et peut être ouvert par une contre-pression agissant par le haut.

7. Dispositif selon l'une des revendications 1 à 6, **caractérisé en ce qu'**un dispositif de purge d'air ou de vidange peut être raccordé à l'extrémité supérieure du tuyau de fluide (1).

8. Dispositif selon la revendication 7, **caractérisé en ce que** :
une conduite de purge d'air ou de vidange peut être raccordée à l'extrémité supérieure du tuyau de fluide (1) ;
un mécanisme d'actionnement permettant d'amener l'organe d'arrêt (2) dans la position ouverte peut être introduit dans la conduite de purge d'air ou de vidange.

9. Dispositif selon la revendication 8, **caractérisé en ce que** :
la conduite de purge d'air ou de vidange comprend un coude de tuyau qui peut être raccordé par une partie de bride ou de raccord inférieure (8.1) à la partie de bride ou de raccord (13), et qui présente une partie de bride ou de raccord supérieure (8.2) pour le raccordement à une conduite d'arrivée ou
d'évacuation, par exemple un flexible ;
il est prévu une tringle de poussée ou de traction (9) qui peut être montée et descendue verticalement dans un palier d'étanchéité (10) du coude de tuyau (8) pour amener le mécanisme de fermeture de la vanne (2) dans la position ouverte ou fermée.

10. Dispositif selon l'une des revendications 1 à 9, **caractérisé en ce que** des fils conducteurs (11) de différents systèmes présentant une possibilité de raccordement à leur extrémité supérieure sont posés dans l'espace annulaire entre le tuyau de fluide (1) et le tuyau d'enveloppe (3).

11. Dispositif selon l'une des revendications 1 à 10, **caractérisé en ce que** le tuyau de fluide (1) présente à son extrémité supérieure un dispositif d'obturation (13.1).
